# EUROPÄISCHE PATENTSCHRIFT

(11) **EP 1 169 158 B1**
(45) Veröffentlichungstag und Bekanntmachung des Hinweises auf die Patenterteilung: **04.06.2003**
(21) Anmeldenummer: 99953610.5
(22) Anmeldetag: 26.08.1999
(51) Int. Cl.: B23Q 7/04

(54) **VERFAHREN UND VORRICHTUNG ZUM BEARBEITEN VON WERKSTÜCKEN**
METHOD AND DEVICE FOR MACHINING WORKPIECES
PROCEDE ET DISPOSITIF DESTINES A L'USINAGE DE PIECES

(30) Priorität: 15.04.1999 DE 19916977
(43) Veröffentlichungstag der Anmeldung: 09.01.2002
(73) Patentinhaber: Bonneick, Sonja, 38102 Braunschweig (DE); Andreu, Kostakis, 12357 Berlin (DE)
(72) Erfinder: Bonneick, Sonja, 38102 Braunschweig (DE); Andreu, Kostakis, 12357 Berlin (DE)
(74) Vertreter: Bremer, Ulrich
(86) Internationale Anmeldenummer: DE9902679
(87) Internationale Veröffentlichungsnummer: WO00062972

(56) Entgegenhaltungen:
- EP-A- 0 076 231
- EP-A- 0 215 209
- EP-A- 0 229 244
- EP-A- 0 812 653
- CH-A- 647 709
- DE-A- 3 620 343
- DE-A- 19 518 965
- GB-A- 1 263 912
- US-A- 4 636 135
- US-A- 5 265 986
- PATENT ABSTRACTS OF JAPAN vol. 4, no. 114 (M-26) [596], 15. August 1980 (1980-08-15) & JP 55 070543 A (MAKINO FURAISU SEISAKUSHO K.K.), 28. Mai 1980 (1980-05-28)
- QUINLAN: "The robot machinists" TOOLING AND PRODUCTION., Bd. 52, Nr. 2, Mai 1986 (1986-05), Seiten 85-87, XP002132008 HUEBER PUBLICATION INC. SOLON., US ISSN: 0040-9243

## Beschreibung

Die Erfindung bezieht sich auf ein Verfahren zum Bearbeiten von Werkstücken in einem Bearbeitungsraum eines Bearbeitungszentrums und ein Bearbeitungszentrum zum Bearbeiten von Werkstücken.

Hierzu sind Bearbeitungszentren bekannt, bei denen ein Werkstück in einer Aufnahmeeinrichtung, im Allgemeinen einem Bearbeitungstisch mit Werkstückaufnahme, eingespannt und mit einem Werkzeug bearbeitet wird, das von einer Spindel aufgenommen und angetrieben wird. Die verschiedenen Werkzeuge werden über einen Werkzeugwechsler von einer Werkzeugablage innerhalb des Bearbeitungsraums aufgenommen und in die Spindel des Bearbeitungszentrums eingewechselt. Die Zuführung der Werkzeuge kann beispielsweise durch ein Kettenmagazin oder Scheibenmagazin erfolgen.

Somit kann durch einen schnellen Auswechselvorgang mittels des Werkzeugwechslers erreicht werden, dass die Bearbeitung durch die Bearbeitungsspindel nur kurzzeitig unterbrochen werden muss.

Nachteilhaft an derartigen Bearbeitungszentren ist jedoch, dass die empfindliche Mechanik des Werkzeugwechslers durch bei der Bearbeitung erzeugte Späne und Staubteilchen beschädigt werden kann. Weiterhin muss die Bewegung der Spindel mit der Bewegung des Werkzeugwechslers koordiniert werden. Hierzu muss zunächst die mechanische Anordnung der Spindel und des Werkzeugwechslers genau aufeinander abgestimmt werden, damit ein genauer und sicherer Auswechselvorgang gewährleistet werden kann. Weiterhin müssen die Spindel und der Werkzeugwechsler in ihren Bewegungsabläufen zueinander koordiniert werden, um ein sicheres Freigeben und Aufnehmen bzw. Auswechseln der Werkzeuge zu gewährleisten zu können. Somit sind entsprechend mechanische und elektrische Schnittstellen der Bearbeitungsspindel und des Werkzeugwechslers erforderlich, die entsprechend störanfällig und kostenträchtig sind.

Die DE 36 20 343 A1 zeigt eine Werkzeugmaschine mit einem um mehrere Achsen relativ zu einem Werkzeugtisch bewegbaren Spindelstock. Greifarme sind von einer Magazinstellung in eine Arbeitsstellung verfahrbar, so dass mit ihnen Werkzeuge aus dem Werkzeugmagazin in eine Aufnahme des Spindelstocks bringbar sind oder umgekehrt. Mindestens eines der Werkzeuge ist als Handhabungselement ausgebildet.

Die EP 0 812 653 A2 zeigt ein Verfahren zum Betreiben einer Werkzeugmaschine, die ein um eine Spindelachse drehbare Spindel, einen von der Spindel getragenen Spindelgreifer zum Ergreifen von Werkstücken sowie eine um eine quer zu der Spindelachse verlaufende Schwenkachse verschwenkbare Wiegenvorrichtung umfasst. Zur Bearbeitung wird die Wiegenvorrichtung mit einem eingespannten Werkstück in einer ersten Stellung bereitgestellt, woraufhin das eingespannte Werkstück mit dem Spindel greifer aus der Wiegenvorrichtung entnommen und gehalten wird. Anschließend kann die leere Wiegenvorrichtung in eine zweite Stellung geschwenkt und/oder der das Werkstück haltende Spindelgreifer um die Spindelachse gedreht werden.

Der Erfindung liegt die Aufgabe zugrunde, gegenüber dem Stand der Technik Verbesserungen zu schaffen, und insbesondere ein Verfahren und eine Vorrichtung zum Bearbeiten von Werkstücken zu schaffen, mit denen eine vielseitige Bearbeitung der Werkstücke bei einer relativ geringen Störanfälligkeit und mit relativ geringem Aufwand ermöglicht wird.

Diese Aufgabe wird durch ein Verfahren nach Anspruch 1 und ein Bearbeitungszentrum nach Anspruch 7 gelöst.

Erfindungsgemäß ist somit vorgesehen, dass die Werkzeuge und/oder Werkstücke in einem Aufnahmebereich außerhalb des Bearbeitungsraums aufgenommen werden. Hierzu wird die Spindel aus dem Bearbeitungsraum zu dem Aufnahmebereich verfahren, wo sie ein Werkzeug oder Werkstück aufnimmt. Dementsprechend ist der Bewegungsraum der Spindel größer als der Bearbeitungsraum.

Somit kann der Einsatz einer zusätzlichen Handhabungsvorrichtung wie des Werkzeugwechslers entfallen, so daß die eingangs genannten Probleme durch Schnittstellen zwischen Spindel und Werkzeugwechsler nicht auftreten können.

Vorteilhafterweise werden sowohl die Werkstücke als auch die Werkzeuge von der Spindel in dem Aufnahmebereich aufgenommen. Der Aufnahmebereich kann beispielsweise durch eine Werkstückzuführung mittels eines Transportbands oder Transportschlittens mit Werkstücken versorgt werden. Die Werkzeuge können von einer Werkzeugablage, z.B. einer Lochplatte mit eingelegten Werkzeugen, entnommen werden. Dabei können die Werkzeugablage und die Werkstückzuführung räumlich getrennt sein, so daß der Aufnahmebereich einen Werkzeugaufnahmebereich und Werkstückaufnahmebereich umfaßt, die voneinander getrennt sind.

Die Aufnahme von Werkstücken durch die Spindel kann beispielsweise erfolgen, indem die Spindel zunächst eine Greifeinrichtung aufnimmt, mit der wiederum die Werkstücke ergriffen und gehandhabt werden können. Die Werkstücke können auch in einer Spannvorrichtung z.B. einem Spannrahmen eingespannt oder in einer Trägervorrichtung, wie zum Beispiel in einer Palette aufgenommen sein. Die Spannvorrichtung oder Trägervorrichtung kann direkt von dem Transportband oder Transportschlitten in den Aufnahmebereich der Spindel gefahren und von der Spindel beziehungsweise der Greifeinrichtung aufgenommen und in den Bearbeitungsraum verfahren werden. Somit kann eine aufwendige manuelle Zufhürung der Werkstücke in dem Bearbeitungsraum entfallen. Insbesondere können schwieriger zu handhabende Werkstücke durch eine entsprechende Spannvorrichtung oder Trägervorrichtung leicht von der Spindel beziehungsweise der Greifeinrichtung ergriffen und gehandhabt werden. Dies ist insbesondere bei Verwendung einer Spindel mit ein oder zwei Kipp- beziehungsweise Schwenkachsen sinnvoll, da hierbei eine schnelle und gute Aufnahme und Positionierung der Werkstücke im Bearbeitungsraum ermöglicht wird. Das fertig bearbeitete Werkstück kann abschließend wiederum abgeführt werden, indem die Spindel oder Greifeinrichtung die Spannvorrichtung oder Trägereinrichtung des Werkstücks ergreift und aus dem Bearbeitungsraum befördert.

Die Werkzeuge können direkt von der Spindel oder mittels entsprechender Adapter, wie z.B. Bohreinsätzen, ergriffen werden. Als Werkzeug kann beispielsweise auch eine Klebepistole aufgenommen werden, mit der an einem Werkstück ein Klebstoff angebracht wird. Weiterhin kann die Spindel beziehungsweise der Greifer ein Laserschweißgerät aufnehmen, um ein Werkstück zu bearbeiten oder zwei Werkstücke zusammen zu schweißen. Entsprechend kann auch eine Vermessungseinrichtung, wie zum Beispiel ein mechanischer Meßkopf oder eine Lasermeßeinrichtung in dem Aufnahmebereich von der Spindel oder dem Greifer aufgenommen und zur Vermessung eines Werkstücks in dem Bearbeitungsraum geführt werden.

Erfindungsgemäß kann somit beispielsweise ein Werkstück von der Spindel in dem Aufnahmebereich aufgenommen werden, in den Bearbeitungsraum verfahren und in die Aufnahmeeinrichtung abgelegt werden. Das in der Aufnahmeeinrichtung aufgenomme Werkstück kann anschließend durch ein von der Spindel in der Werkzeugablage aufgenommenes Werkzeug bearbeitet werden. Das fertig bearbeitete Werkstück kann anschließend mittels einer Transporteinrichtung oder aber durch die Spindel selbst wiederum aus dem Bearbeitungsraum entfernt werden.

Weiterhin ist es möglich, daß durch die erfindungsgemäße Bearbeitungsvorrichtung Montagevorgänge vorgenommen werden, bei denen Werkstücke aneinandergefügt werden. Hierzu kann gegebenenfalls zusätzlich Klebstoff verwendet werden, so daß ein Werkstück zunächst von der Werkstoffzuführung in den Bearbeitungsraum gebracht und in die Aufnahmeeinrichtung eingelegt wird, anschließend die Spindel eine Klebepistole von der Werkzeugablage ergreift und Klebstoff auf dem Werkstück aufbringt, und nachfolgend ein weiteres Werkstück von der Werkstückzuführung aufgenommen und an das erste Werkstück im Klebebereich angesetzt wird.

Das erfindungsgemäße Verfahren kann somit für alle Bearbeitungsverfahren, z.B. Bohr-, Fräs-, Schleif-, und Hohnverfahren verwendet werden. Indem ein Werkzeug, wie z.B. ein Drehstahl, in die Aufnahmeeinrichtung eingelegt wird und nachfolgend ein Werkstück von der Spindel ergriffen und zu dem Werkzeug geführt wird, kann beispielsweise auch ein Drehverfahren durchgeführt werden, bei dem das Werkstück von der Spindel angetrieben wird.

Indem Linearmotoren, insbesondere luftgekühlte Linearmotoren, für die Verstellung der Spindel verwendet werden, kann ein schneller Auswechselvorgang der Werkzeuge auch ohne Werkzeugwechsler sowie eine schnelle Auswahl der Werkstücke erfolgen.

Die verschiedenen oben beschriebenen verfahrensschritte, daß heißt insbesondere der Bearbeitung eines Werkstücks durch ein Werkzeug, eines Fügeverfahrens zweier Werkstücke mit oder ohne

Klebemittel oder Verschweißvorgang sowie eines Meßverfahrens zur Vermessung des Werkstücks können erfindungsgemäß alleine oder in Kombination von der Bearbeitungsvorrichtung durchgeführt werden. Somit ist eine vielseitige Verwendung der Bearbeitungsvorrichtung ermöglicht, bei der die Spindel lediglich jeweils die verschiedenen Werkstücke und/oder Werkzeuge beziehungsweise den Greifer oder eine Trägervorrichtung oder Spannvorrichtung oder eine Vermessungseinrichtung aufnehmen und in den Bearbeitungsraum verfahren muß.

Die Erfindung wird im folgenden anhand der beiliegenden Zeichnungen an einigen Ausführungsformen näher erläutert. Es zeigen:
- Figur 1 -: eine perspektivische Ansicht einer erfindungsgemäßen Bearbeitungsvorrichtung;
- Figur 2 -: eine Seitenansicht dieser Vorrichtung;
- Figur 3 -: eine Vorderansicht dieser Vorrichtung;
- Figur 4 -: eine Vorderansicht dieser Vorrichtung mit aufgenommenem Werkstück.

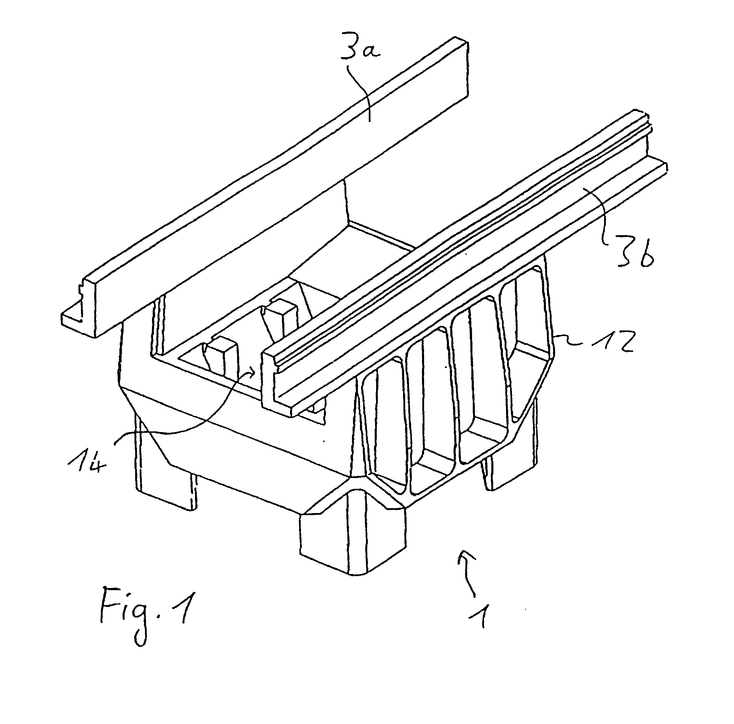

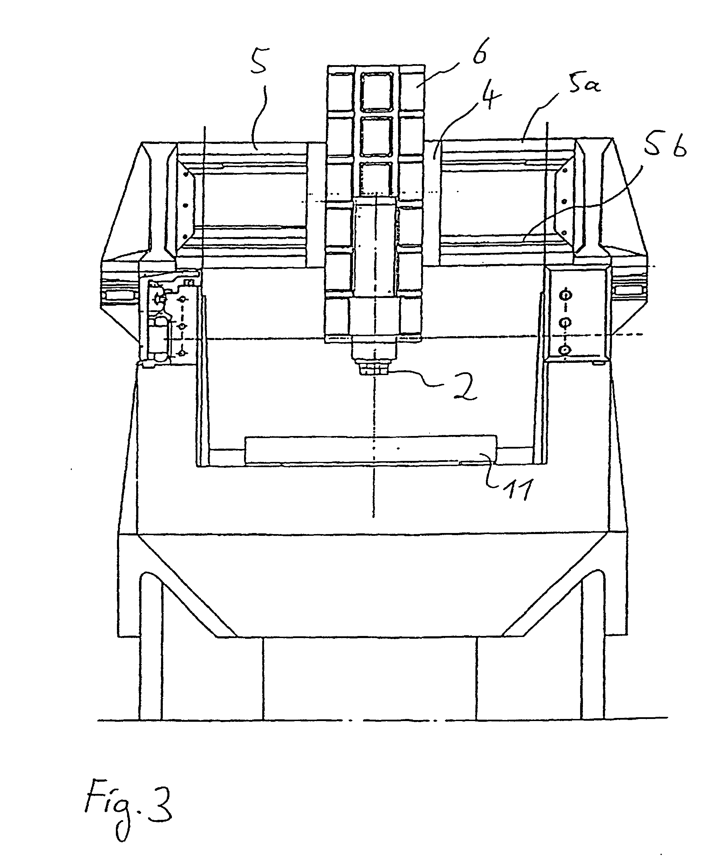

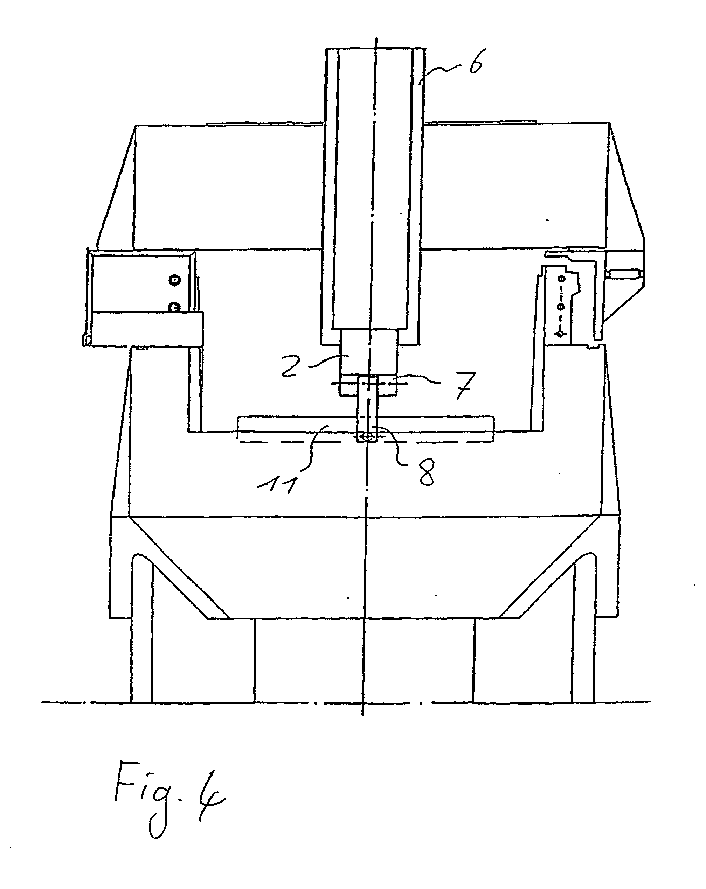

Ein Bearbeitungszentrum 1 weist gemäß Figur 1 ein Gestell 12 auf, an dem eine Längsführung durch Längsschienen 3a, 3b gebildet wird. In dem Gestell 12 ist ein Bearbeitungsraum 14 angeordnet, in dem Werkstücke bearbeitet werden können. An der durch die Längsschienen 3a, b gebildeten Längsführung ist eine in Figur 3, 4 ersichtliche Querführung 5 in Längsrichtung verschiebbar geführt. An der Querführung 5, die beispielsweise durch zwei Querschienen 5a, 5b gebildet werden kann, ist ein Bearbeitungsschlitten 4 in Querrichtung Y verschiebbar geführt. Somit kann der Bearbeitungsschlitten 4 in der horizontalen Ebene durch die Längs- und Querführung frei verschoben werden. In vertikaler Richtung kann die Spindel 2 durch eine Vertikalführung in dem Bearbeitungsschlitten 4 verschoben werden, so daß die Spindel 2 insgesamt im dreidemensionalen Raum frei verschiebbar ist.

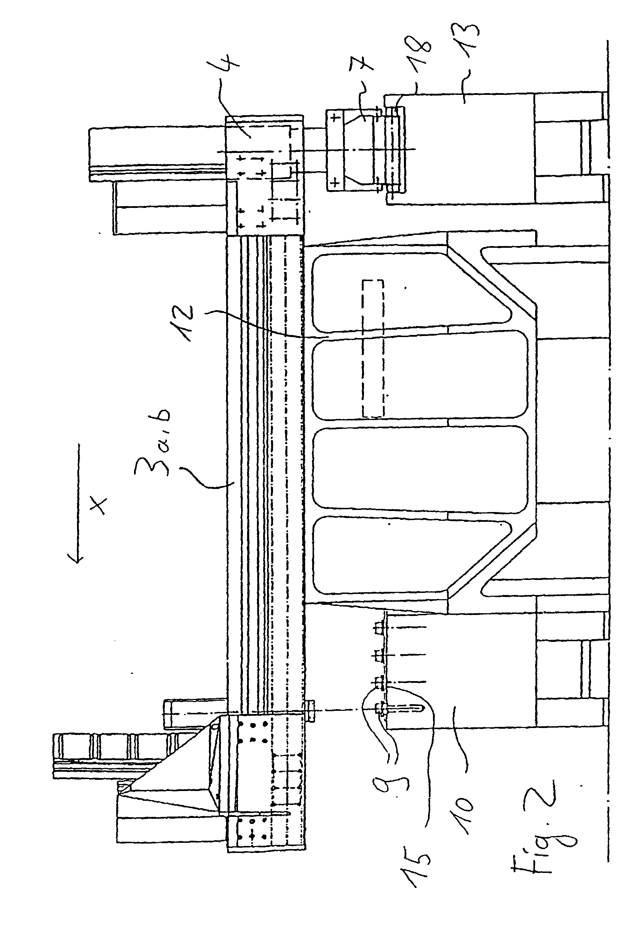

Gemäß Figur 2 kann der Bearbeitungsschlitten 4 in Längsrichtung bzw. X-Richtung über den Bearbeitungsraum 14 bzw. das Gestell 12 hinaus verschoben werden. Somit kann von der Spindel 2 zum einen die in Figur 2 links gezeigte Werkzeugablage 10 und zum anderen die in Figur 2 rechts gezeigte Werkstückzuführung 13 angefahren werden.

Die Werkzeugablage 10 weist gemäß Figur 2 beispielsweise eine Lochplatte 15 auf, in die verschiedene Werkzeuge, wie z.B. Bohreinsätze 9 eingelegt werden können. Weiterhin können Werkzeuge auch an Haken oder anderen Befestigungen abgelegt werden.

Die Werkstückzuführung 13 kann beispielsweise von einem Transportband oder einem Transportschlitten mit Werkstücken beschickt werden. Zur Aufnahme eines Werkstücks wird von der Spindel 2 ein Greifer 7 aufgenommen, mit dem wiederum die Werkstücke 8, 18 ergriffen und in den Bearbeitungsraum befördert werden. Der Bearbeitungsraum kann gemäß Figur 3, 4 einen Bearbeitungstisch 11 aufweisen, der beispielsweise ein Rundtisch und/oder dreh- oder kippbarer Bearbeitungstisch ist. Der Tisch kann weiterhin in einer Längsrichtung verschiebbar sein.

Erfindungsgemäß können somit Werkstücke und Werkzeuge außerhalb des Bearbeitungsraums aufgenommen und in den Bearbeitungsraum befördert werden. Hier können Bearbeitungsverfahren und/oder Montageverfahren durchgeführt werden. Bei den Bearbeitungsverfahren wird ein Werkstück oder ein Werkzeug an dem Bearbeitungstisch 11 befestigt und nachfolgend ein Werkstück bzw. Werkzeug von der Spindel 2 aufgenommen und zu der Aufnahmeeinrichtung verfahren. Dabei wird beispielsweise bei einem Drehverfahren ein Drehwerkzeug auf dem Bearbeitungstisch befestigt und ein Werkstück von der Spindel 2 angetrieben und zu dem Drehwerkzeug verfahren. Weiterhin kann in bekannter Weise ein Werkstück 8 gemäß Figur 4 auf dem Bearbeitungstisch 11 abgelegt werden. Nachfolgend wird ein Bearbeitungswerk von der Spindel 2 aufgenommen und das abgelegte Werkstück 8 hiermit bearbeitet.

## Patentansprüche

1. Verfahren zum Bearbeiten von Werkstücken in einem Bearbeitungsraum eines Bearbeitungszentrums, bei dem
eine mittels Linearmotoren in einer vertikalen Richtung, einer Längsrichtung und einer Querrichtung verstellbare Spindel (2) zu einem Aufnahmebereich (10, 13) außerhalb des Bearbeitungsraums geführt wird, wahlweise Werkstücke (8, 18) und Werkzeuge (9) in dem Aufnahmebereich von der Spindel aufgenommen werden, die Werkstücke und Werkzeuge in den Bearbeitungsraum verfahren und für die Bearbeitung von Werkstücken mittels der Spindel (2) und der Aufnahmeeinrichtung verwendet werden, wobei die Längsrichtung, Querrichtung und vertikale Richtung zueinander senkrecht liegen und folgende Bearbeitungen durchgeführt werden :
a) zur Aufnahme eines Werkstücks wird zunächst ein Greifer (7) von der Spindel (2) aufgenommen, und von dem Greifer (7) das Werkstück (8, 18) in einer Werkstückzuführung (13) ergriffen,
b) ein Werkstück wird in einer Spannvorrichtung eingespannt oder in einer Trägervorrichtung aufgenommen, und die Spannvorrichtung oder Trägervorrichtung wird in dem Aufnahmebereich von der Spindel oder einem Greifer aufgenommen und in den Bearbeitungsraum verfahren,
c) ein Werkzeug wird in dem Aufnahmebereich aufgenommen und ein Werkstück wird von dem Werkzeug mittels eines Dreh-, Bohr-, Schleif-, Fräs- oder Hohnverfahrens bearbeitet

2. Verfahren nach Anspruch 1, **dadurch gekennzeichnet, dass** von einer Werkzeugablage (10), in der mehrere Werkzeuge abgelegt sind, wahlweise ein Werkzeug (9) von der Spindel (2) aufgenommen wird.

3. Verfahren nach einem der vorherigen Ansprüche, **dadurch gekennzeichnet, dass** ein Werkstück von der Spindel aufgenommen und in der Aufnahmeeinrichtung (11) abgelegt wird, nachfolgend ein weiteres Werkstück (8) von der Spindel aufgenommen und in den Bearbeitungsraum verfahren wird, und die beiden Werkstücke mittels der Spindel zusammengefügt werden.

4. Verfahren nach Anspruch 3, **dadurch gekennzeichnet, dass** nach Ablage des ersten Werkstücks (8) von der Spindel (2) zunächst eine Klebepistole von der Werkzeugablage (10) aufgenommen, mittels der Klebepistole ein Klebemittel an dem ersten Werkstück (8) angebracht wird, die Klebepistole wiederum abgelegt wird, und nachfolgend das zweite Werkstück von der Werkstückzuführung (13) aufgenommen und mit dem ersten Werkstück in einem Klebebereich zusammengefügt wird.

5. Verfahren nach einem der vorherigen Ansprüche, **dadurch gekennzeichnet, dass** von der Spindel ein Laserschweißgerät aufgenommen wird, und ein Werkstück durch ein Laserschweißverfahren bearbeitet oder zwei Werkstücke durch ein Laserschweißverfahren verbunden werden.

6. Verfahren nach einem der vorherigen Ansprüche, **dadurch gekennzeichnet, dass** die Spindel eine Vermessungseinrichtung, vorzugsweise einen mechanischen Messkopf oder eine Lasermesseinrichtung, in dem Aufnahmebereich aufnimmt, in den Bearbeitungsraum verfährt und mit der Vermessungseinrichtung ein Werkstück vermisst.

7. Bearbeitungszentrum zum Bearbeiten von Werkstücken, insbesondere zur Durchführung eines Verfahrens nach einem der Ansprüche 1 bis 6, das aufweist:
ein Gestell (12),
zumindest drei Führungsachsen mit Führungen,
eine Aufnahmeeinrichtung (11) für Werkstücke, die innerhalb eines Bearbeitungsraums der Vorrichtung angeordnet ist,
einen Aufnahmebereich mit Werkzeugen und Werkstücken, der außerhalb des Bearbeitungsraums angeordnet ist,
mindestens eine Spindel (2), die innerhalb und außerhalb des Bearbeitungsraums durch die Führungsachsen in einer vertikalen Richtung (z), einer Längsrichtung (x) und einer Querrichtung (y), die jeweils zueinander senkrecht liegen, dreidimensional verfahrbar ist,
zumindest ein von der Spindel aufnehmbarer Greifer (7),
zumindest eine Spannvorrichtung oder Trägervorrichtung für Werkstücke, die von der Spindel aufnehmbar ist,
wobei die Spindel in den Aufnahmebereich zur Aufnahme von Werkzeugen und Werkstücken und zu der Aufnahmeeinrichtung (11) für eine Bearbeitung der Werkstücke verfahrbar ist,
wobei von der Spindel in dem Aufnahmebereich Werkzeuge (9) für ein Bohr-, Schleif-, Fräs- oder Hohnverfahren direkt oder mittels entsprechender Adapter aufnehmbar sind,
wobei von der Spindel in dem Aufnahmebereich ein Greifer (7) für die Aufnahme von Werkstücken oder eine Spannvorrichtung oder Trägervorrichtung für Werkstücke aufnehmbar ist, und
wobei die Spindel (2) in den mindestens drei Führungsachsen durch Linearmotoren verstellbar sind.

8. Bearbeitungszentrum Anspruch 7, **dadurch gekennzeichnet, dass** die Spindel (2) in verschiedene Aufnahmepositionen des Aufnahmebereichs verfahrbar ist.

9. Bearbeitungszentrum nach einem der Ansprüche 7 oder 8, **dadurch gekennzeichnet, dass** die Spindel um mindestens eine, vorzugsweise zwei Achsen kipp- bzw. schwenkbar ist.

10. Bearbeitungszentrum nach einem der Ansprüche 7 bis 9, **dadurch gekennzeichnet, dass** die Aufnahmeeinrichtung einen horizontal drehbaren und/oder um eine horizontale Achse kipp- bzw. schwenkbaren und/oder in einer horizontalen Richtung verschiebbaren Bearbeitungstisch (11) aufweist.

11. Bearbeitungszentrum nach einem der Ansprüche 7 bis 10, **dadurch gekennzeichnet, dass** sie mindestens zwei Spindeln (2) ausweist, die unabhängig voneinander verfahrbar sind.

12. Bearbeitungszentrum nach Anspruch 11, **dadurch gekennzeichnet, dass** die beiden Spindeln auf unterschiedlichen Transportschlitten (4) angeordnet und in diesen vertikal verfahrbar sind, wobei die unterschiedlichen Transportschlitten auf einer gemeinsamen Querführung und/oder Längsführung angeordnet sind.

## Claims

1. Process for machining of workpieces in the machining area of a machining centre, in which
a spindle (2) which can be adjusted by means of linear motors in a vertical direction, in a longitudinal direction and in a transverse direction is run to a pick-up area (10,13) outside of the machining area, in which either workpieces (8, 18) or tools (9) are picked up by the spindle in the pick-up area, the workpieces and tools are run to the machining area and used by spindle (2) and the pick-up system for the machining of workpieces, in which context the longitudinal direction, the transverse direction and the vertical direction are perpendicular to each other and the following machining operations are conducted:
a) for the picking-up of a workpiece, in the first instance a gripper (7) is picked up by spindle (2), and the workpiece (8,18) is gripped in a workpiece feed (13) by gripper (7).
b) a workpiece is clamped in a clamping device or picked up in a carrier device, and the clamping device or carrier device is picked up in the pick-up area by the spindle or by the gripper and run to the machining area,
c) a tool is picked up in the pick-up area and a workpiece is machined by the tool using a machining, drilling, grinding, milling or honing process.

2. Process corresponding to Claim 1, **characterised in that** as desired a tool (9) is picked up by spindle (2) from a tool store (10) in which several tools are stored.

3. Process corresponding to any of the above claims, **characterised in that** a workpiece is picked up by the spindle and deposited in the pick-up system (11), subsequently a further workpiece (8) is picked up by the spindle and is run to the machining area, and the 2 workpieces are assembled by spindle (2).

4. Process corresponding to Claim 3, **characterised in that** after deposition of the first workpiece (8) by spindle (2) in the first instance a bonding gun is picked up from tool store (10), an adhesive is applied by means of the bonding gun to the first workpiece (8), the bonding gun is once again deposited and thereafter the second workpiece is picked up by workpiece feed (13) and is assembled with the first workpiece in a bonding area.

5. Process corresponding to one of the above claims, **characterised in that** a laser welder is picked up by the spindle, and a workpiece is treated by a laser welding process or two workpieces are combined together by a laser welding process.

6. Process corresponding to one of the above claims, **characterised in that** the spindle picks up a survey system, ideally a mechanical measurement head or a laser measurement system, in the pick-up area, runs to the machining area and uses the survey system to survey a workpiece.

7. Machining centre for the machining of workpieces, in particular for performing a process corresponding to one of Claims 1 to 6, which exhibits: a chassis (12), at least three guidance axes with guides, a pick-up system (11) for workpieces, which is located within a machining area in the device, a pick-up area with tools and workpieces, which is located outside of the machining area, at least one spindle (2) which can be run both within and outside of the machining area by the guidance axes in a vertical direction (z), a longitudinal direction (x) and a transverse direction (y) which are perpendicular to each other in three dimensions, at least one gripper (7) which can be picked up by the spindle, at least one pick-up device or carrier device for workpieces which can be picked up by the spindle, whereby the spindle can be run to the pick-up area for the picking-up of tools and workpieces and to pick-up system (11) for machining of workpieces, whereby tools (9) for a drilling, grinding, milling or honing process can be picked up directly by the spindle in the pick-up area or by means of corresponding adapters, whereby a gripper (7) for the picking-up of workpieces -- or a pick-up device or carrier device for workpieces -- can be picked up by the spindle in the pick-up area, and
whereby spindles (2) can be adjusted by linear motors in the guidance axes, of which there should be at least three.

8. Machining centre corresponding to Claim 7, **characterised in that** spindle (2) can be run to various pick-up positions in the pick-up area.

9. Machining centre corresponding to one of Claims 7 or 8, **characterised in that** the spindle can be turned or pivoted through at least one (preferably two) axes.

10. Machining centre corresponding to one of Claims 7 to 9, **characterised in that** the pick-up system exhibits a machining table (11) which can be rotated horizontally and/or turned or pivoted about a horizontal axis and/or manoeuvred in a horizontal direction.

11. Machining centre corresponding to one of Claims 7 to 10, **characterised in that** it exhibits at least two spindles (2) which can be manoeuvred independent of each other.

12. Machining centre corresponding to Claim 11, **characterised in that** the two spindles are arranged on different transport carriages (4) and can be run vertically within them, whereby the various transport carriages are arranged on a common transverse and/or longitudinal guide.

## Revendications

1. Procédé d'usinage de pièces à usiner dans un espace d'usinage d'un centre d'usinage, suivant lequel une broche (2), qui est réglable dans un sens vertical, longitudinal et transversal au moyen de moteurs linéaires, est déplacée dans une zone de réception (10, 13) à l'extérieur du centre d'usinage, dans laquelle des pièces à usiner (8, 18) et des outils (9) sont saisis au choix par la broche, pièces à usiner et outils, qui sont déplacés dans l'espace d'usinage et utilisés pour l'usinage de pièces à usiner au moyen de la broche (2) et du dispositif de réception, les sens longitudinal, transversal et vertical étant perpendiculaires, l'un par rapport à l'autre, et les usinages suivants étant exécutés :
a) pour saisir une pièce à usiner, la broche (2) saisit d'abord une griffe (7) et la griffe (7) saisit la pièce à travailler (8, 18) dans un dispositif d'amenée (13) de pièces à usiner,
b) une pièce à usiner est montée dans un dispositif de serrage ou reçue dans un dispositif porteur et le dispositif de serrage ou le dispositif porteur est saisi par la broche ou par une griffe, dans une zone de réception, et déplacé dans l'espace d'usinage,
c) un outil est saisi dans la zone de réception et une pièce à travailler est usinée par l'outil suivant un procédé de tournage, d'alésage, de meulage, de fraisage ou d'honage.

2. Procédé suivant la revendication 1, **caractérisé en ce que**, dans le dépôt d'outils (10), dans lequel sont déposés plusieurs outils (9), un outil (9) au choix est saisi par la broche (2).

3. Procédé suivant une des revendications précédentes, **caractérisé en ce qu'**une pièce à usiner est saisie par la broche et déposée dans le dispositif de réception (11), après quoi une autre pièce à travailler est saisie par la broche et déplacée dans l'espace d'usinage et que les deux pièces à usiner sont assemblées au moyen de la broche.

4. Procédé suivant la revendication 3, **caractérisé en ce qu'**après le dépôt de la première pièce à usiner (8) par la broche (2), est d'abord saisi, dans le dépôt d'outils (10), un pistolet de collage, au moyen duquel une colle est appliquée sur la première pièce à usiner (8), après quoi le pistolet de collage est déposé et la seconde pièce à usiner est saisie sur le dispositif d'amenée de pièces à usiner (13) et assemblée à la première pièce à usiner dans une zone de collage.

5. Procédé suivant une des revendications précédentes, **caractérisé en ce que** la broche saisit une soudeuse à laser et qu'une pièce à usiner est usinée suivant un procédé de soudure au laser ou que deux pièces à usiner sont rassemblées suivant un procédé de soudure au laser.

6. Procédé suivant une des revendications précédentes, **caractérisé en ce que** la broche saisit dans la zone de réception un dispositif de mesure, de préférence une tête de mesure mécanique ou un dispositif de mesure à laser, le déplace dans l'espace d'usinage et mesure une pièce à usiner à l'aide du dispositif de mesure.

7. Centre d'usinage de pièces à usiner, servant en particulier à exécuter un procédé suivant une des revendications 1 à 6, centre, qui présente un bâti (12), un dispositif de réception (11) pour des pièces à usiner disposé à l'intérieur d'un espace d'usinage du centre, une zone de réception pour des outils et des pièces à usiner disposé à l'extérieur de l'espace d'usinage, au moins une broche (2) qui peut être déplacée dans trois dimensions, à l'intérieur et à l'extérieur de l'espace d'usinage, par au moins trois axes de guidage comportant des guidages, dans un sens vertical (z), longitudinal (x) et transversal (y), qui sont respectivement perpendiculaires, l'un par rapport à l'autre, la broche étant déplaçable dans la zone de réception servant à recevoir des outils et des pièces à usiner et au dispositif de réception (11) servant à l'usinage des pièces à usiner, la broche pouvant saisir dans la zone de réception, directement ou au moyen d'un adaptateur correspondant, des outils (9) pour un procédé d'alésage, de meulage, de fraisage ou d'honage, ainsi qu'une griffe (7) servant de réception pour les pièces à usiner, ou un dispositif de serrage ou un dispositif porteur pour des pièces à usiner, et, la broche (2) étant réglable sur les trois axes de guidage au moins par des moteurs linéaires.

8. Centre d'usinage suivant la revendication 7, **caractérisé en ce que** la broche (2) peut être déplacée dans différentes positions de réception de la zone de réception.

9. Centre d'usinage suivant une des revendications 7 ou 8, **caractérisé en ce que** la broche peut être basculée ou pivotée autour d'un axe, de préférence autour de deux axes.

10. Centre d'usinage suivant une des revendications 7 à 9, **caractérisé en ce que** le dispositif de réception présente une table d'usinage (11 ) orientable horizontalement et/ou pouvant être basculée ou pivotée autour d'un axe horizontal et/ou déplacée dans le sens horizontal.

11. Centre d'usinage suivant une des revendications 7 à 10, **caractérisé en ce qu'**il présente deux broches (2) au moins, qui sont déplaçables indépendamment l'une de l'autre.

12. Centre d'usinage suivant la revendication 11, **caractérisé en ce que** les deux broches sont disposées sur des chariots de transport (4) différents, dans lesquels elles sont déplaçables verticalement, les chariots de transport différents étant disposés sur un guidage transversal et/ou un guidage longitudinal commun.
